# EUROPEAN PATENT APPLICATION

(11) **EP 4 714 241 A1**
(43) Date of publication of application: **25.03.2026**
(21) Application number: 25191323.2
(22) Date of filing: 23.07.2025
(51) Int. Cl.: A01B 69/04

(54) **ROUTE PLANNING FOR AN AGRICULTURAL VEHICLE**

(30) Priority: 23.09.2024 GB 202413985
(71) Applicant: AGCO International GmbH, 8212 Neuhausen am Rheinfall (CH)
(72) Inventor: ZHOU, Kun, 8930 Randers (DK); NILSSON, Rene, DK8900 Randers (DK); LAUSDAHL, Kenneth, DK8900 Randers (DK); BECH, Søren, DK8900 Randers (DK)
(74) Representative: AGCO Intellectual Property Department

(57) **Abstract**

A mechanism for generating a recommended route for an agricultural vehicle in advance of performing an agricultural process. The mechanism further includes tracking adherence of the agricultural vehicle to the recommended route and/or controlling the vehicle to follow the recommended route. The recommended route is generated responsive to at least boundary information, a plurality of waylines generated based on windrow information, and a plurality of generated connecting segments.

## Description

### CROSS-REFERENCE TO RELATED APPLICATIONS

N/A.

### FIELD

Embodiments of the present disclosure relate to agricultural vehicles, and in particular to route planning for agricultural vehicles.

### BACKGROUND

With ever-increasing population numbers and ongoing interest in more environmentally friendly farming practices, there is a desire to improve the efficiency of performing agricultural processes. Examples of agricultural processes include ploughing, planting, spraying, fertilizing, harvesting and so on. Each of these activities plays a distinct role in the overall agricultural production cycle and their efficiency directly impacts the productivity and sustainability of farming operations.

One of the identified areas for improving agricultural efficiency is the route or path taken by an agricultural vehicle during the performance of these processes. Several factors are considered when planning a route for an agricultural vehicle, such as minimizing fuel consumption, decreasing soil compression, and expanding the area available for crop cultivation, e.g., by reducing the number of vehicle tracks in the treated region.

Typically, route planning techniques make use of a known boundary of a region to undergo the agricultural process (e.g., a field). The objective of the generated route is to define a path by which the vehicle can perform the agricultural process over the entirety of this region in the most efficient manner possible, e.g., taking the above considerations into account. In particular, efficiently generating effective routes for the harvesting of windrows is difficult.

### BRIEF SUMMARY

According to examples in accordance with this disclosure, there is provided a computer-implemented method for generating a recommended route for an agricultural vehicle to perform an agricultural process within a predetermined region bound by a boundary.

The computer-implemented method comprises: obtaining, by a guidance control system, boundary information defining the predetermined region; obtaining, by the guidance control system, windrow information defining the locations of a plurality of windrows within the predetermined region; generating, by the guidance control system, a plurality of waylines based on the windrow information; generating, by the guidance control system, a plurality of connecting segments for connecting the generated plurality of waylines together; generating, by the guidance control system, a recommended route for movement of the agricultural vehicle within the predetermined region by processing at least the boundary information, the plurality of waylines, and the plurality of connecting segments; and during a subsequent performance of the agricultural process by the agricultural vehicle within the region: monitoring, using a position monitoring device, the position of the agricultural vehicle with respect to the recommended route; and responsive to a deviation of the monitored position of the agricultural vehicle from the recommended route, updating, by the guidance control system, the recommended route.

The present disclosure thereby provides a mechanism for determining a recommended route for an agricultural vehicle in advance of performing an agricultural procedure or process (e.g., a harvesting procedure or an offloading procedure). The recommended route is generated based on boundary information, a plurality of waylines (generated based on windrow information), and a plurality of connecting segments (for connecting the plurality of waylines together).

For example, by obtaining and using windrow information describing a number of windrows in a field, waylines can be efficiently generated based on said windrow information. Said waylines can then be used to help efficiently generate an effective recommended route, e.g., for an agricultural process involving said windrows. Information is thus efficiently used in order to generate an effective recommended route for movement of an agricultural vehicle.

The present disclosure also proposes to track the adherence of the agricultural vehicle to the recommended route when performing the agricultural process. The route is updated responsive to a deviation of the agricultural vehicle from the recommended route, to thereby provide an adaptive approach that directly responds to a physical operation or position of the agricultural vehicle.

In some examples, generating the plurality of way lines comprises offsetting each of the plurality of windrows to opposing sides by a predetermined length such that for each windrow, a corresponding pair of waylines is generated. This approach provides an effective method for essentially converting windrow information into waylines, i.e., converting each windrow into two corresponding waylines. For example, for each windrow, a corresponding pair of waylines may be generated such that there is one wayline to one side of the windrow (separated from the windrow by a predetermined length) and one wayline to the other side of the windrow (separated from the windrow by the same predetermined length).

In some examples, generating the plurality of waylines is further based on a spout length of a second agricultural vehicle to be used in the agricultural process. This approach thus facilitates the generation of more useful and practical waylines, such that a spout length of a second agricultural vehicle (for example, a harvester for harvesting the windrows) can be taken into account, thus allowing, for example, more effective offloading of said harvested windrows to the agricultural vehicle.

In some examples, generating the plurality of way lines comprises offsetting each of the plurality of windrows to opposing sides by the spout length of the second agricultural vehicle, such that for each windrow, a corresponding pair of waylines is generated. This approach thus facilitates the generation of more useful and practical waylines, such that the spout length of the second agricultural vehicle (for example, a harvester for harvesting the windrows) can be specifically used to offset the windrows for the generation of waylines, thus allowing, for example, more effective offloading of said harvested windrows to the agricultural vehicle.

In some examples, the computer-implemented further comprises: obtaining, by the guidance control system, road information defining at least one road connected to the predetermined region; and wherein generating the plurality of connecting segments further comprises generating at least one connecting segment for connecting the at least one road connected to the predetermined region to at least one of the generated plurality of waylines. This approach allows for the generation of a more complete recommended route, allowing the route to include how the agricultural vehicle will access the predetermined region from a road.

In some examples, each of the plurality of connecting segments comprise a smooth curved segment. Smooth curved segments provide effective connecting segments which agricultural vehicles can effectively and easily follow.

In some examples, obtaining the windrow information comprises generating the windrow information, by the guidance control system, based on georeferenced data defining a route taken by a past agricultural vehicle. This approach provides an effective and reliable way to obtain the windrow information.

In some examples, the route taken by the past agricultural vehicle is a route of the past agricultural vehicle which resulted in the formation of the plurality of windrows. This approach thus facilitates an efficient, reliable and time-saving way to automatically obtain the windrow information by using data from, for example, a raking operation performed by an agricultural vehicle in the past which resulted in the formation of the windrows.

In some examples, generating the recommended route comprises: generating a directed weighted multigraph comprising a plurality of vertices and a plurality of arcs by processing at least the boundary information, the plurality of waylines, and the plurality of connecting segments; and generating the recommended route based on the generated directed weighted multigraph. A directed weighted multigraph is an effective format for combining the boundary, wayline, and connecting segment information and thus for facilitating the generation of a recommended route.

In some examples, the agricultural vehicle comprises a transport unit and the agricultural process comprises offloading the plurality of windrows from a second agricultural vehicle during harvesting. This would be a particularly beneficial use of the present disclosure.

The computer-implemented method may further comprise controlling an output user interface to provide a visual representation of the recommended route. This provides an operator of the agricultural vehicle with information on the recommended route. It will be appreciated that, if the recommended route is updated during the agricultural process, then the visual representation of the recommended route may be updated accordingly. This provides a human-machine interface that aids a human to perform a more effective agricultural process within the predetermined region.

In some examples, controlling the output user interface comprises providing a visual representation of the predetermined region; and overlaying a visual representation of the recommended route, over the visual representation of the predetermined region, in the form of one or more lines representing the recommended route. This provides an intuitive visual representation of the recommended route for increasing a likelihood of an individual adhering to the recommended route.

In some examples, the position monitoring device is configured to define a position of the agricultural vehicle within a predefined co-ordinate system; and the recommended route defines a recommended path for the agricultural vehicle within the predefined co-ordinate system. This provides a reliable system for defining and monitoring adherence to the recommended route.

The recommended route may comprise one or more location markers each identifying a point of the recommended route with respect to the predetermined co-ordinate system. This provides a reliable and resource-efficient mechanism for storing data that identifies the recommended route.

In some examples, the act of obtaining the boundary information comprises retrieving the boundary information from a database storing a plurality of instances of boundary information for different predetermined regions. Thus, it is not necessary that the guidance control system perform the generation of the boundary information, rather the boundary information may be extracted from a database. Thus, the boundary information may be predefined or precalculated, in order to improve a speed and/or efficiency of generating the recommended route.

In some examples, the act of obtaining the boundary information comprises generating the boundary information by processing satellite imagery of the predetermined region. Thus, the boundary information may still be obtained even if, for example, it is not available in a database.

There is also provided a method for moving an agricultural vehicle within a predetermined region bound by a boundary, the method comprising: obtaining, by a guidance control system, boundary information defining the predetermined region; obtaining, by the guidance control system, windrow information defining the locations of a plurality of windrows within the predetermined region; generating, by the guidance control system, a plurality of waylines based on the windrow information; generating, by the guidance control system, a plurality of connecting segments for connecting the generated plurality of waylines together; generating, by the guidance control system, a recommended route for movement of the agricultural vehicle within the predetermined region by processing at least the boundary information, the plurality of waylines, and the plurality of connecting segments; and during a subsequent performance of the agricultural process by the agricultural vehicle within the region, controlling the travel direction of the agricultural vehicle to follow the recommended route for the agricultural vehicle.

In some examples, the act of controlling the direction of the agricultural vehicle is performed automatically. Alternatively, the act of controlling the direction of the agricultural vehicle may be performed by an operator or user of the agricultural vehicle, i.e., controlled manually.

In some examples, the method further comprises restricting or preventing the performance of an agricultural process by the agricultural vehicle until after the recommended route is available.

There is also provided an agricultural vehicle, comprising: a guidance control system configured to control one or more operations of the agricultural vehicle and comprising: at least one processor; and at least one non-transitory computer-readable storage medium storing instructions thereon that, when executed by the at least one processor, cause the guidance control system to: obtain boundary information defining the predetermined region; obtain windrow information defining the locations of a plurality of windrows within the predetermined region; generate a plurality of waylines based on the windrow information; generate a plurality of connecting segments for connecting the generated plurality of waylines together; generate a recommended route for movement of the agricultural vehicle within the predetermined region by processing at least the boundary information, the plurality of waylines, and the plurality of connecting segments; and during a subsequent performance of the agricultural process by the agricultural vehicle within the region: monitor, using a position monitoring device, the position of the agricultural vehicle with respect to the recommended route; and responsive to a deviation of the monitored position of the agricultural vehicle from the recommended route, update, by the guidance control system, the recommended route.

The guidance control system may be adapted to perform the acts of any herein proposed method, and vice versa.

In some examples, the agricultural vehicle further comprises an output user interface and wherein at least one non-transitory computer-readable storage medium of the guidance control system further comprises instructions that, when executed by the at least one processor, cause the guidance control system guidance control system to provide, on the output user interface, a visual representation of the recommended route.

There is also provided an agricultural vehicle comprising a guidance control system configured to control one or more operations of the agricultural vehicle and comprising: at least one processor; and at least one non-transitory computer-readable storage medium storing instructions thereon that, when executed by the at least one processor, cause the guidance control system to: obtain boundary information defining the predetermined region; obtain windrow information defining the locations of a plurality of windrows within the predetermined region; generate a plurality of waylines based on the windrow information; generate a plurality of connecting segments for connecting the generated plurality of waylines together; generate a recommended route for movement of the agricultural vehicle within the predetermined region by processing at least the boundary information, the plurality of waylines, and the plurality of connecting segments; and during a subsequent performance of the agricultural process by the agricultural vehicle within the region, control the travel direction of the agricultural vehicle to follow the recommended route for the agricultural vehicle.

Other technical features may be readily apparent to one skilled in the art from the following figures, descriptions, and claims.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the disclosure will now be described, by way of example only, with reference to the accompanying drawings, in which:
FIG. 1 is a flowchart illustrating a proposed method;
FIGS. 2A-2D illustrate an example of a proposed method
FIG. 3 is a flowchart illustrating another proposed method;
FIG. 4 illustrates a system comprising a guidance control system as herein proposed; and
FIG. 5 illustrates an agricultural vehicle comprising a guidance control system as herein proposed.

### DETAILED DESCRIPTION

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," etc., is used for clarity and convenience in understanding the disclosure and accompanying drawings, and does not connote or depend on any specific preference or order, except where the context clearly indicates otherwise. For example, these terms may refer to an orientation of elements as illustrated in the drawings. Additionally, these terms may refer to an orientation of elements of the disclosure when utilized in a conventional manners.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

This disclosure relates to a mechanism for generating a recommended route for an agricultural vehicle in advance of performing an agricultural process. The mechanism further includes tracking adherence of the agricultural vehicle to the recommended route and/or controlling the vehicle to follow the recommended route. The recommended route is generated responsive to at least boundary information, a plurality of generated waylines, and a plurality of generated connecting segments.

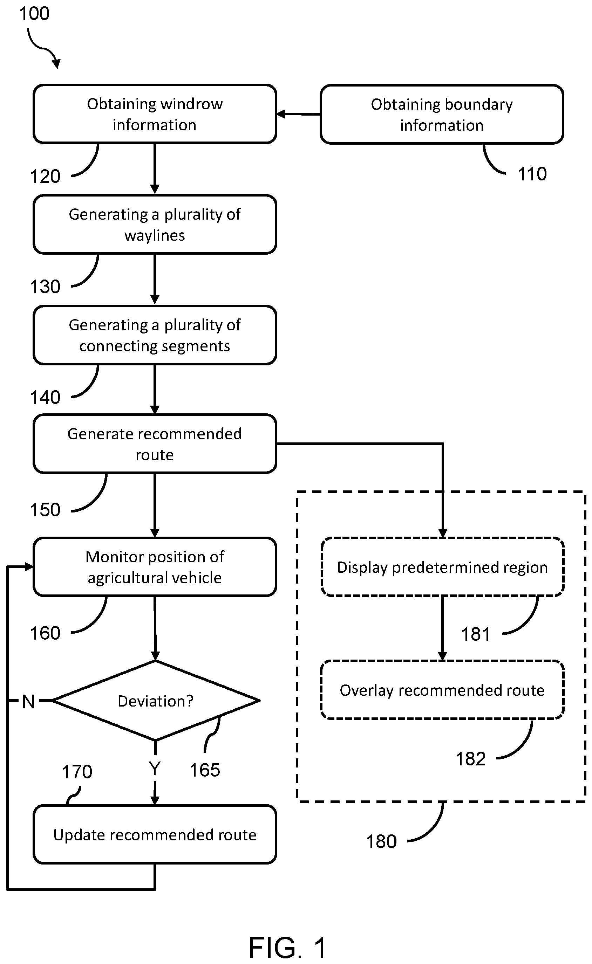

FIG. 1 is a flowchart illustrating a proposed computer-implemented method 100 that is executed, e.g., by a processing system, to perform the proposed approach. In particular, the method 100 is designed for generating a recommended route for an agricultural vehicle to perform an agricultural process within a predetermined region bound by a boundary.

The computer-implemented method 100 comprises an act 110 of obtaining, by a guidance control system, boundary information. The boundary information defines the predetermined region using a series (e.g., a set) of connected boundary segments (e.g., linear boundary segments). In other words, the boundary information can comprise information indicating the boundary of the predetermined region using a closed set of (linear and/or curved) boundary segments which are connected end to end.

The boundary information may, for instance, be retrieved from a memory or database. More particularly, wherein the act of obtaining the boundary information may comprises retrieving the boundary information from a database storing a plurality of instances of boundary information for different predetermined regions. In this approach, the boundary information corresponding to the predetermined region is selected. Thus, it is not necessary that the guidance control system perform the generation of the boundary information, rather the boundary information may be extracted from a database. Thus, the boundary information may be predefined or precalculated, in order to improve a speed and/or efficiency of generating the recommended route.

Alternatively, the boundary information can be generated by the guidance control system by processing satellite imagery of the predetermined region. This can thus allow boundary information to still be obtained even in situations where it is not retrievable from a database.

The computer-implemented method also comprises an act 120 of obtaining, by the guidance control system, windrow information defining the locations of a plurality of windrows within the predetermined region. For example, a windrow is a long, narrow pile or row of cut hay, grass, straw, or other crop material that has been raked or piled together to dry before further processing, such as baling. Windrows are also used in other agricultural processes, like composting or managing crop residues. It should be noted that that the plurality of windrows can be physically present in the predetermined region or they can be simulated/virtual windrows (e.g., based on the path of a past agricultural vehicle or based on satellite imagery of the predetermined region).

In some embodiments, the windrow information can thus define the locations of a plurality of simulated windrows within the predetermined region. Preferably, however, in other embodiments, the windrow information defines the locations of a plurality of windrows (actually) present in the predetermined region. In some embodiments, the window information may thus take the form of a mask of the predetermined region, indicating if, for a given pixel/location, any part of a (real or virtual) windrow is present or not. Of course, as the skilled person would be aware, in other embodiments, the windrow information can take any suitable form.

In some embodiments, obtaining the boundary information and obtaining the windrow information can happen simultaneously, e.g., in the same act/procedure. For example, by processing satellite imagery of the predetermined region, both boundary information and windrow information could be generated and thus obtained in the same act.

In this embodiment, obtaining the windrow information (i.e., act 120) comprises generating the windrow information, by the guidance control system, based on georeferenced data defining a route taken by a past agricultural vehicle. The past agricultural vehicle may be the same as the agricultural vehicle or the second agricultural vehicle (mentioned further on) or it may be a different agricultural vehicle - what is important is that the route taken by it, and upon which the windrow information is generated, was taken in the past, i.e., before the obtaining of the windrow information. Georeferenced data for a route taken can be understood as information defining specific geographic coordinates (e.g., latitude and longitude) to points along the route, allowing the route to be accurately mapped and analyzed. Georeferenced data can thus also be referred to as geotagged route data, spatially referenced route information, or GPS-tracked path data. Of course, in other embodiments, the windrow information can be obtained in any suitable way, such as retrieving from a database, using sensing technologies, or, as mentioned above, generated based on satellite imagery.

In this embodiment, the route taken by a past agricultural vehicle is specifically a route of the past agricultural vehicle which resulted in the formation of the plurality of windrows (e.g., the route of the raker which raked the windrows). In other words, the route taken by the past agricultural vehicle is a route which at least partially helped form the plurality of windrows. This approach thus facilitates an efficient, reliable and time-saving way to automatically obtain the windrow information by using data from, for example, a raking operation performed by an agricultural vehicle in the past which resulted in the formation of the windrows. In other embodiments, however, this need not be the case and the route taken by the past agricultural vehicle could be, for example, the route of a vehicle which drove next to each of the windrows after they were already formed.

The computer-implemented method also comprises an act 130 of generating, by the guidance control system, a plurality of waylines based on the windrow information. In other words, act 130 comprises generating a plurality of waylines by processing the windrow information.

For example, a wayline comprises a straight, linear segment (e.g., of an eventual recommended route), as would be understood by the skilled person. In some embodiments, the boundary information may indicate or be processed to derive one or more constraints or boundary conditions on the generation of the waylines along with the windrow information. The wayline(s) may be generated to adhere to any such constraints.

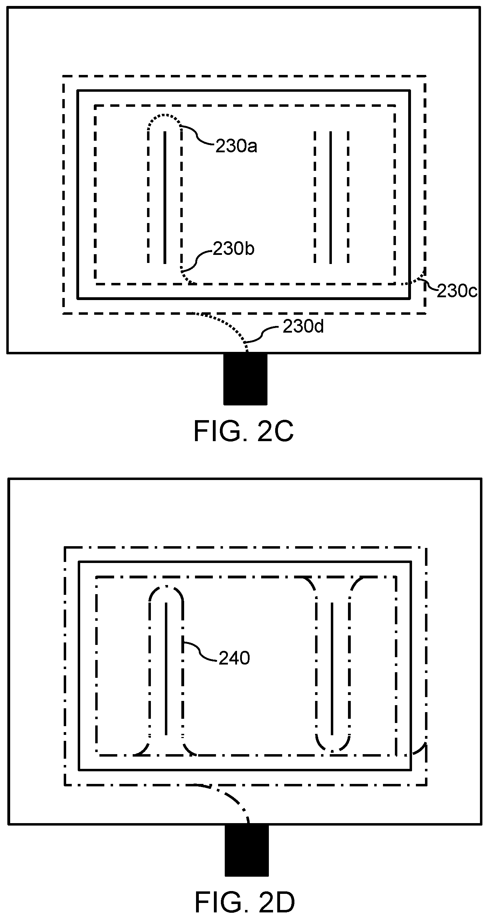

In some embodiments of the disclosure, generating the plurality of waylines (i.e., act 130) comprises offsetting each of the plurality of windrows to opposing sides by a predetermined length such that for each windrow, a corresponding pair of way lines is generated. This approach provides an effective method for essentially converting windrow information into waylines, i.e., converting each windrow into two corresponding waylines. For example, for each windrow, a corresponding pair of waylines can be generated such that there is one wayline to one (elongated) side of the windrow (separated from the windrow by a predetermined length) and one wayline to the other (elongated) side of the windrow (separated from the windrow by the same predetermined length). It should be noted that the length of the (offset) waylines may be adjusted (i.e., lengthened or shortened) compared to the windrows, for example, to facilitate the connecting of two ends of intersecting waylines (such as can be seen in Fig. 2C).

In fact, in this embodiment, generating the plurality of waylines (i.e., act 130) specifically comprises offsetting each of the plurality of windrows to opposing sides by a spout length of a second agricultural vehicle to be used in the agricultural process, such that for each windrow, a corresponding pair of waylines is generated. This approach thus facilitates the generation of more useful and practical waylines, such that the spout length of the second agricultural vehicle (for example, a harvester for harvesting the windrows) can be specifically used to offset the windrows for the generation of waylines, thus allowing, for example, more effective offloading of said harvested windrows to the agricultural vehicle during performance of the agricultural process.

It should be noted that, of course, in other embodiments of the disclosure, generating the plurality of waylines in act 130 can be more generally based on a spout length of a second agricultural vehicle to be used in the agricultural process (i.e., not specifically used to offset the windrows). There are many ways this information could be taken into account and used during the generation of waylines, as would be understood by the skilled person.

To be clear, the spout length of an agricultural vehicle can be understood as referring to, for example, the length of the discharge chute used on harvesting equipment like forage harvesters or combines. It determines how far the harvester can transfer crop material to a transport unit and affects the precision of unloading.

The computer-implemented method 100 also comprises an act 140 of generating, by the guidance control system, a plurality of connecting segments for connecting the generated plurality of waylines together. In other words, the plurality of connecting segments are for connecting at least one end of each of the generated plurality of waylines to at least one other wayline such that all waylines end up connecting to at least one other wayline via a connecting segment. In yet other words, the plurality of connecting segments are generated such that the waylines are connected together via one or more connecting segments, each connecting segment being connected to an end of one wayline and an end or middle position of a different wayline. In some embodiments, the plurality of connecting segments may be generated such that every wayline is connected to every other wayline (or, for example, all other waylines within a predetermined distance) - in this case, of course, the resulting recommended route, generated in act 150, would only include a subset of the generated plurality of connecting segments.

In a simple example, the connecting segments may comprise straight lines between ends of different waylines. In this embodiment, however, each of the plurality of connecting segments actually comprise a smooth curved segment. Smooth curved segments provide effective connecting segments which agricultural vehicles can effectively and easily follow.

The connecting segments can be generally categorized into four different types of connecting segments. First, an access-to-headland turn: a connecting segment between a field access point (e.g., a road) and a wayline for a headland windrow. These connecting segments thus provide a path for the agricultural vehicle to enter and exit the predetermined region. Second, a headland-to-headland path turn: a connecting segment between two adjacent waylines for one or more headland windrows. These connecting segments thus allow the agricultural vehicle to move between headland waylines. Third, an infield path-to-headland path turn: a connecting segment between a wayline end for an infield windrow and a wayline for a headland windrow for the agricultural vehicle to drive from an infield wayline to a headland wayline or vice versa. Fourth, an infield -to-infield path turn: a connecting segment between a wayline end for an infield windrow and another wayline end for an infield windrow.

To be clear, and as the skilled person would know, a headland path is a route around the perimeter of a field that agricultural vehicles use for turning and maneuvering, and an infield path is the route taken within the main body of the field where the actual harvesting or planting operations occur, typically in parallel lines.

The computer-implemented method 100 also comprises an act 150 of generating, by the guidance control system, a recommended route for movement of the agricultural vehicle within the predetermined region by processing at least the boundary information, the plurality of waylines, and the plurality of connecting segments. For example, in some embodiments, the recommended route can be generated by essentially combining the plurality of waylines and (at least a subset of) the plurality of connecting segments while ensuring that the recommended route stays within the predetermined region (defined by the boundary information). In some embodiments, only at least one wayline per pair of waylines (if they were generated by being offset to opposing sides) may be included in the recommended route. In some embodiments, for example, where the plurality of connecting segments are generated to connect each wayline to every other wayline, the recommended route may include only the minimum number of connecting segments to allow the agricultural vehicle to traverse every (selected) wayline. The skilled person would appreciate the myriad ways in which the plurality of connecting segments and plurality of waylines could be combined and/or utilized in order to generate a recommended route.

It should be noted that in some embodiments, each segment of the recommended route (e.g., wayline, connecting segment, etc.) can have a cost associated with it, such as travel distance, estimated time to travel, soil compaction, and these costs can be used during the generation of the recommended route to find an optimal recommended route which minimizes one or more of these costs (as well as if the route is interrupted, to calculate the new recommended route).

The recommended route may be defined with respect to a predetermined spatial co-ordinate system, such as a global or geographic co-ordinate system (e.g., longitude and latitude), a region/local co-ordinate system (e.g., a trilaterated/triangulated position) or a relative co-ordinate system, such as one defined with respect to the boundary of the predetermined region.

The boundary information may indicate or be processed to derive one or more constraints or boundary conditions on the generation of the recommended route. The recommended route may be generated to adhere to any such constraints.

For instance, one or more machine-learning algorithms may be appropriately configured and/or trained for generating a recommended route for movement of the agricultural vehicle within the predetermined region by processing at least the boundary information, the plurality of waylines, and the plurality of connecting segments. Any suitable machine-learning algorithm may be used in different embodiments for the present disclosure. Suitable machine-learning algorithms include (artificial) neural networks, support vector machines (SVMs), Naïve Bayesian models and decision tree algorithms, although other appropriate examples will be apparent to the skilled person.

There are a number of well-established approaches for training a machine-learning algorithm. One widely used learning approach is known as a supervised learning approach, which makes use of a large database of known input and output data. In such techniques, the machine-learning algorithm is modified until an error between predicted output data, obtained by processing the input data with the machine-learning algorithm, and the actual

(known) output data is close to zero, i.e., until the predicted output data and the known output data converge. The value of this error is often defined by a cost function, which can be selected or defined by an appropriately skilled individual. The precise mechanism for modifying the machine-learning algorithm depends upon the type of model. Example approaches for use with a neural network include gradient descent, backpropagation algorithms and so on.

It is not essential that the machine learning algorithm(s) be trained by the guidance control system. Rather, the machine-learning algorithm(s) may be trained in advance of their usage (i.e., exploitation for performing inference) by the guidance control system. More specifically, the machine-learning algorithm(s) may be trained by a dedicated training processing system, such as a cloud-based processing system.

The computer-implemented method also comprises performing further acts 160 and 170, which are only performed during a subsequent (to act 150) performance of the agricultural process.

Act 160 comprises monitoring, using a position monitoring device, the position of the agricultural vehicle with respect to the recommended route. Act 160 may be performed by the guidance control system communicating or otherwise interacting with the position monitoring device to monitor the position of the agricultural vehicle.

Approaches for monitoring or tracking the position of an agricultural vehicle are widely known in the art, and typically track a positioning element of the agricultural vehicle. For instance, the positioning element may comprise a satellite navigation system for tracking the position of the positioning element. As another example, the positioning element may comprise an antenna that outputs one or more signals that are triangulated/trilaterated using an (external) triangulation/trilateration system.

The monitored/tracked position of the agricultural vehicle may be defined in the same spatial co-ordinate system as the recommended route. Where appropriate or required, this may comprise perform a spatial transformation of the monitored/tracked position and/or the recommended route so that both sets of data lie in a same spatial co-ordinate system, i.e., share a same spatial co-ordinate system. Approaches for performing such a technique are well known in the art, particularly as the relationship between different spatial co-ordinate systems can be readily defined.

Put another way, the position monitoring device may be configured to define a position of the agricultural vehicle within a predefined co-ordinate system. The recommended route defines a recommended path for the agricultural vehicle within the predefined co-ordinate system.

Act 170 comprises, responsive to a deviation of the monitored position of the agricultural vehicle from the recommended route, updating, by the guidance control system, the recommended route.

Thus, act 170 may comprise a sub-act 165 of determining whether or not that there is a deviation from the monitored position of the agricultural vehicle from the recommended route. Sub-act 165 may be performed by the guidance control system and/or the position monitoring system.

One approach to performing act 165 is to determine a shortest distance (e.g., in the shared spatial co-ordinate system) between the monitored position and the recommended route. Responsive to the determined distance breaching/exceeding a predetermined threshold (e.g., representing a spatial distance of no less than 1 m), then act 165 may determine that there is a deviation from the recommended route. Responsive to the determined distance failing to breach/exceed a predetermined threshold (e.g., representing a spatial distance of no less than 1 m), then act 165 may determine that there is no deviation from the recommended route.

Responsive to a positive determination in sub-act 165 (i.e., when a deviation is detected), the method 100 moves to a sub-act 170 of updating the recommended route. Sub-act 170 may be performed, for instance, by effectively repeating the procedure performed in act 150 - but with a modified version of the boundary of the region of interest. In particular, the boundary may be moved such that the predetermined region no longer contains any part of the region that has undergone the agricultural procedure.

It should be noted that the following of the recommended route can be interrupted (due to, for example, the agricultural vehicle needing to unload the collected windrows), and the route can thus be accordingly updated to direct the agricultural vehicle to, for example, a silo, and then back to the initially generated recommended route.

In some examples, the recommended route comprises one or more location markers each identifying a point of the recommended route with respect to the predetermined co-ordinate system. This provides a mechanism for coherently and reliably defining the recommended route using a relatively small amount of data.

Optionally, the method 100 further comprises an act 180 of controlling an output user interface to provide a visual representation of the recommended route. Approaches for controlling an output user interface (e.g., a display or screen) to provide a visual representation of a data element will be readily apparent to the skilled person.

As a working example, act 180 may comprise a sub-act 181 of controlling the output user interface to provide a visual representation of the predetermined region. This may be performed, for example, by using the boundary information to define the shape of the predetermined region. As an alternative example, this may be performed by using an aerial photograph (e.g., a satellite image) of the predetermined region.

In this working example, act 180 may further comprise a sub-act 182 of overlaying a visual representation of the recommended route, over the visual representation of the predetermined region. The visual representation of the recommended route may take the form of one or more lines representing the recommended route.

Sub-act 182 can be trivially performed if the spatial relationship between the predetermined region and the recommended route is known, e.g., they are defined in a same spatial co-ordinate system. In particular, the global position of an area represented in an aerial photograph, such as a satellite image, is known or determinable when the aerial photograph is taken. If the recommended route can be defined using similar geographic position information, then a visual representation of the recommended route can be trivially overlaid upon the visual representation of the predetermined region.

Although not illustrated in FIG. 1, the method 100 may comprise, during the agricultural procedure, controlling (using a vehicle control device) a movement of the agricultural vehicle to follow the recommended route. This may be performed by monitoring the position of the agricultural vehicle (e.g., using any previously described approach) and controlling the steering of the agricultural vehicle such that the monitored position follows the recommended route.

In this way, the method 100 may comprise the requirement that: controlling the direction of the agricultural vehicle is performed automatically.

Approaches for automated control of an agricultural vehicle to follow a recommended route are known in the art, e.g., as suggested by (inter alia) Pedersen, Søren Marcus, et al. "Agricultural robots-system analysis and economic feasibility." Precision agriculture 7 (2006): 295-308 or O'Connor, Michael, et al. "Automatic steering of farm vehicles using GPS." Proceedings of the Third International Conference on Precision Agriculture. Madison, WI, USA: American Society of Agronomy, Crop Science Society of America, Soil Science Society of America, 1996.

Alternatively, controlling the movement of the agricultural vehicle may be performed or controlled by a human operator of the agricultural vehicle, e.g., performing a manual control of the travel direction(s) (and speed) of the agricultural vehicle using any known vehicle control mechanism (e.g., a steering wheel or the like). In such approaches, the method 100 may thus comprise controlling an output user interface to provide a visual representation of the recommended route (example approaches for which have been previously described) and controlling, by the human operator, the travel direction of the agricultural vehicle responsive to the recommended route.

In this embodiment, in method 100, the agricultural vehicle comprises a transport unit (e.g., a transport vehicle) and the agricultural process comprises offloading the plurality of windrows from a second agricultural vehicle (e.g., the same second agricultural vehicle as mentioned above (for example, a harvester, the spout length of which can be used to help generate the waylines)) during harvesting (of said plurality of windrows). In other words, the agricultural process comprises transferring the plurality of windrows from a second agricultural vehicle to the transport unit (during harvesting of the plurality of windrows). Of course, as the skilled person would appreciate, in other embodiments, the agricultural vehicle can comprise any suitable agricultural vehicle and the agricultural process can comprise any suitable agricultural process. For example, the agricultural vehicle may comprise a harvester (i.e., a harvesting unit) and the agricultural process may comprise harvesting the plurality of windrows.

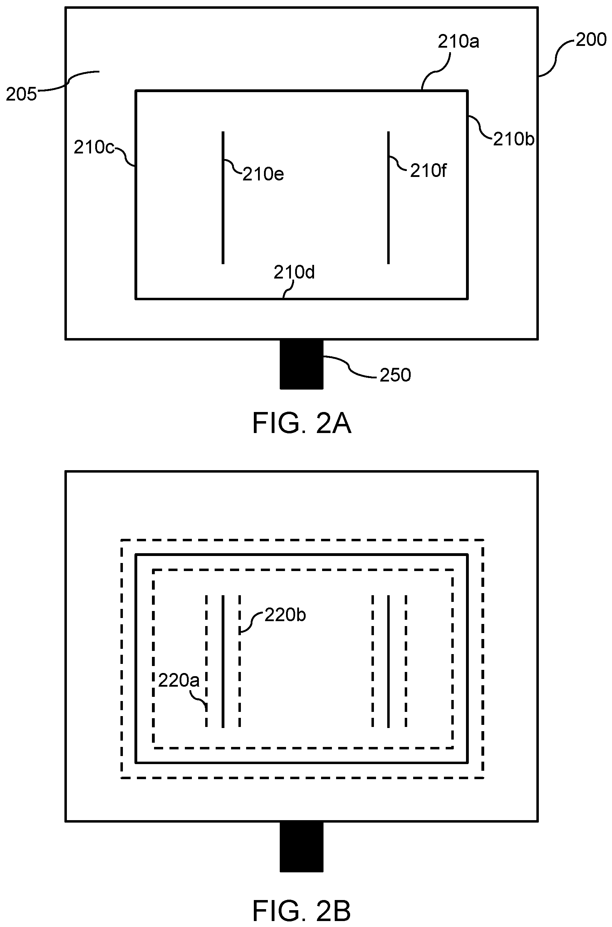

FIG. 2A illustrates the start of an example of a proposed method according to the present disclosure. Specifically, FIG. 2A illustrates an example of boundary information 200 such as that obtained in act 110 of method 100. For example, the boundary information 200 comprises a series of connected linear boundary segments, thus forming a rectangle. Together, the linear boundary segments thus define a predetermined region 205, for example, a field.

In the predetermined region 205, six windrows 210a-210f are present. Windrows 210a-210d are headland windrows, which each take the form of a linear segment and which together form a closed rectangle. Windrows 210e and 210f comprise infield windrows which take the form of disconnected linear segments. There is also a road 250 present which connects to the predetermined region 205.

In FIG. 2B, waylines, e.g., 220a and 220b, have been generated based on the locations of the windrows, 210a-210f. For example, the waylines have been generated by offsetting each windrow to opposing sides by a predetermined (constant) length such that for each windrow, a corresponding pair of waylines is generated. As can be seen, the length of the waylines generated for the headland windrows, 210a-210d, have been adjusted such that the ends of the corresponding waylines can connect to one another.

In FIG. 2C, a few example connecting segments, 230a-230d, are shown. Of course, in reality, more connecting segments would be generated in order to connect all the waylines, and, of course, this could take many different forms. Connecting segment 230a comprises a smooth curved 180-degree turn in order to connect up the ends of waylines of an infield windrow. Connecting segment 230b comprises a smooth curved turn in order to connect the end of a wayline of an infield windrow to the middle of a wayline of a headland windrow. Connecting segment 230c comprises a smooth curved turn to connect the two waylines of a headland windrow. Connecting segment 230d comprises a smooth curved turn to connect the road to the closest wayline.

In FIG. 2D, a recommended route 240 has been generated by essentially combining the waylines and the connecting segments (purely for example, several more connecting segments have been added here compared to FIG. 2C in order to make the route continuous), while ensuring that the route stays within the predetermined region. To be clear, the recommended route 240 is purely provided as an example and is not supposed to be indicative of a preferred or optimal recommended route.

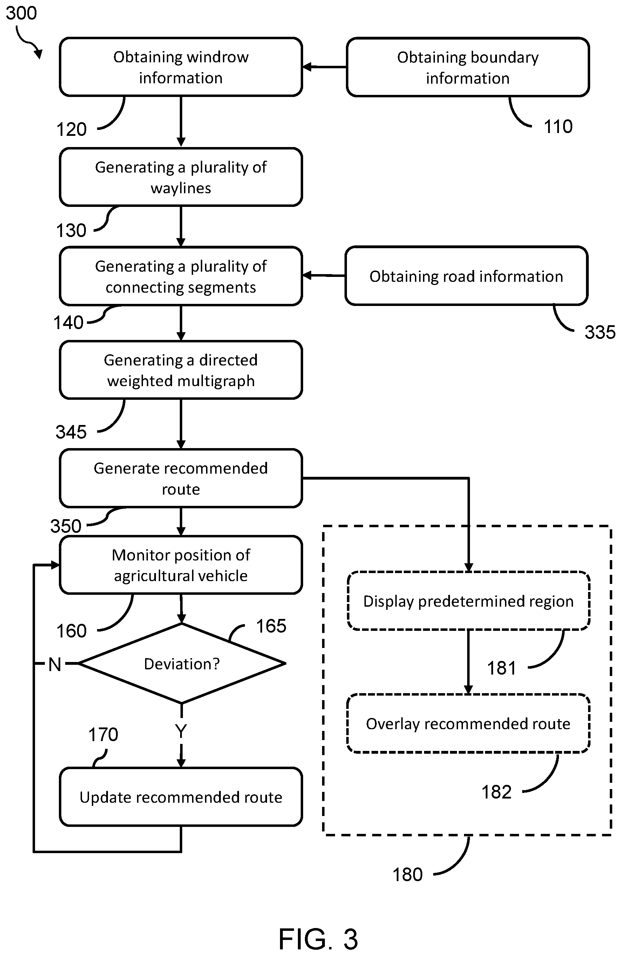

FIG. 3 a flowchart illustrating another proposed computer-implemented method 300. Acts 110, 120, 130, 140, 160, 165, 170, 180, 181 and 182 are substantially the same as have been described in relation to method 100 of FIG. 1.

The computer-implement method 300 comprises act 335 of obtaining, by the guidance control system, road information defining at least one road connected to the predetermined region. In other words, the road information defines the location/position of at least one road which connects (or at least is accessible (for the agricultural vehicle) from) the predetermined region (e.g., using an access point). In act 140, the plurality of connecting segments are thus generated such that at least one connecting segment is generated for connecting the at least one road connected to the predetermined region to at least one of the generated plurality of waylines (preferably, the closest wayline to the road).

In other embodiments, the road information may define a plurality of roads, for example, connecting the predetermined region to a base location (e.g., a farm, a storehouse). In these embodiments, the recommended route generated in act 150 could thus further be based on the road information such that a recommended route is generated which, for example, starts at the base location and then goes to the predetermined region (where it then follows the waylines and connecting segments, for example) and then back to the base location.

The computer-implemented method 300 comprises act 345 of generating a directed weighted multigraph comprising a plurality of vertices and a plurality of arcs by processing at least the boundary information, the plurality of waylines, and the plurality of the connecting segments. In other words, act 345 comprises generating a directed weighted multigraph based on at least the boundary information, the plurality of waylines, and the plurality of connecting segments.

A directed weighted multigraph is a type of graph in which: the edges (connections between nodes) have a direction, meaning they go from one node to another in a specific order (i.e., directed); each edge has an associated weight, which can represent costs, distances, or other values (i.e., weighted); and multiple edges (including those with different weights) can exist between the same pair of nodes (i.e., multigraph). This structure allows for complex relationships, such as multiple paths or varying strengths of connection between nodes.

Act 350 thus comprises generating the recommended route based on the generated directed weighted multigraph.

In a specific example, the directed weighted multigraph can be understood as *G=(V,A),* where *V* is a set of vertices and *A* is a set of arcs. Each geometric element (e.g., a wayline or connecting segment) can then be represented by a pair of arcs with opposite directions. Each arc *aᵢⱼ* is associated with a length *lᵢⱼ,* a type *tᵢⱼ*, (e.g., an infield wayline, a headland wayline, a connecting segment), and its reverse arc *rᵢⱼ.* Each arc can be associated with a cost, for example, the path length or estimated travel time. Note that the source and target vertices of each arc pair are independent: ∀*aᵢⱼ* ∈ A, *rᵢⱼ = aₖₗ* ⇒ *i ≠ k,* j ≠ *l.*

The multigraph can be managed during actual performance of the recommended route (generated based on said graph) by, for example, a graph manager module (which may be part of the guidance control system) based on machine state information generated by, for example a state estimator (which, again, may be part of the guidance control system).

A state estimator may be a component which estimates the state of the agricultural vehicle (e.g., a transport unit) and, for example, a second agricultural vehicle (e.g., a harvester). The estimated states can then be used, for example, during performance of the agricultural procedure (e.g., harvesting the windrows) to predict the harvester unloading location and heading direction when it will need to unload (based on a real time harvesting speed, etc.).

For example, the graph manager may maintain and update the generated multigraph based on states provided by the state estimator. For example, after a windrow has been harvested by a second agricultural vehicle, then the cost of the corresponding graph edge can be updated, for example, from infinite (because a non-harvested windrow is non-drivable for an agricultural vehicle) to an actual cost (e.g., distance). The updated multigraph can then be used to generate an updated recommended route. In another example, the agricultural vehicle (in this case, a transport unit) drives with an empty wagon/container from a first position to an unloading position for a second agricultural vehicle (in this case, a harvester) with a heading direction. For ease of explanation, a state vector can be given as s = (n1, n2, c1p, cp2), where n1 is the node which the transport unit was departing from and n2 is the node that it is heading to. Note that n1 and n2 can be two nodes of the same graph edge, which can correspond to a path end, a turn end, a road intersection, etc. The current position of the transport unit is denoted as p. C1p thus denotes the cost of travelling from n1 to the current position p and cp2 denotes the cost of travelling from the current position p to n2. The graph manager can thus insert two edges for each state vector just described.

For example, a path planner module (which may be part of the guidance control system) can then take the initial and goal states as input for the multigraph. The optimal path between these two states can be found in terms of a series of nodes in the multigraph based on optimization criteria such as distance, travelling time, soil compaction, etc., which can then be converted to a series of waypoints by retrieving the wayline or connecting segment points corresponding to the edges between the nodes. This path planning problem can then be solved using known algorithms such as Dijkstra, A*, Bellman-Ford, etc.

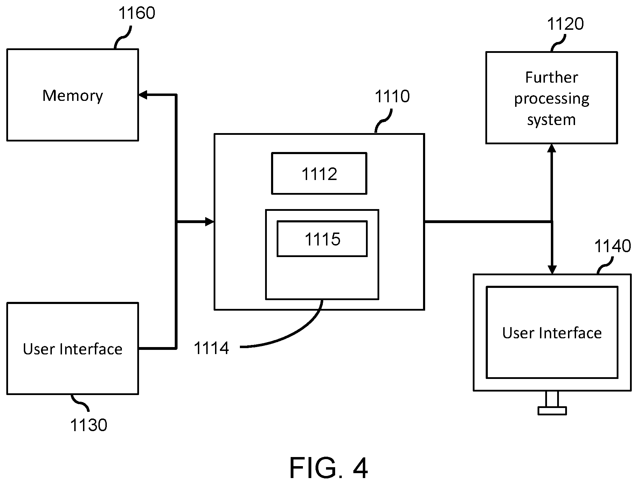

FIG. 4 illustrates an example of system 1100 in which embodiments may be employed.

The guidance control system comprises a guidance control system 1110, which is itself an embodiment of the disclosure, a position monitoring device 1120, an (optional) input user interface 1130, and an (optional) output user interface 1140.

The guidance control system 1110 is configured to perform and/or co-ordinate the performance of any previously disclosed act that is identified as being performed by or using the guidance control system.

In particular examples, the guidance control system 1110 may perform the acts of: obtaining, by a guidance control system, boundary information defining the predetermined region; obtaining, by the guidance control system, windrow information defining the locations of a plurality of windrows within the predetermined region; generating, by the guidance control system, a plurality of waylines based on the windrow information; generating, by the guidance control system, a plurality of connecting segments for connecting the generated plurality of waylines together; generating, by the guidance control system, a recommended route for movement of the agricultural vehicle within the predetermined region by processing at least the boundary information, the plurality of waylines, and the plurality of connecting segments; and during a subsequent performance of the agricultural process by the agricultural vehicle within the region: monitoring, using a position monitoring device, the position of the agricultural vehicle with respect to the recommended route; and responsive to a deviation of the monitored position of the agricultural vehicle from the recommended route, updating, by the guidance control system, the recommended route.

In some examples, the guidance control system 1110 may perform acts of: obtaining, by a guidance control system, boundary information defining the predetermined region; obtaining, by the guidance control system, windrow information defining the locations of a plurality of windrows within the predetermined region; generating, by the guidance control system, a plurality of waylines based on the windrow information; generating, by the guidance control system, a plurality of connecting segments for connecting the generated plurality of waylines together; generating, by the guidance control system, a recommended route for movement of the agricultural vehicle within the predetermined region by processing at least the boundary information, the plurality of waylines, and the plurality of connecting segments; and during a subsequent performance of the agricultural process by the agricultural vehicle within the region, controlling the travel direction of the agricultural vehicle to follow the recommended route for the agricultural vehicle.

More specifically, the guidance control system 1110 may comprise at least one processor 1112 and at least one non-transitory computer-readable storage medium 1114 storing instructions 1115 thereon that, when executed by the at least one processor, cause the guidance control system to perform any previously disclosed act that is identified as being performed by or using the guidance control system.

The skilled person would be readily capable of developing a guidance control system for carrying out any herein described method. Thus, each act of the flow chart may represent a different action performed by a guidance control system and may be performed by a respective module of the guidance control system.

The position monitoring device 1120 is configured to monitor the position of an agricultural vehicle during the performance of an agricultural process. Approaches for monitoring the position of a vehicle are well known in the art, some of which have been previously described in detail. The function or operation of the position monitoring system may be controlled by and/or responsive to instructions/communications from the guidance control system.

The guidance control system 1110 and the position monitoring device 1120 are configured to communicate with one another over any wired/wireless medium, e.g., an ethernet cable, using any suitable or known communication protocol.

The input user interface 1130 may be adapted to receive one or more inputs from a user or operator. The input(s) may, for instance, be used to define one or more properties or parameters used in one or more of the herein disclosed methods.

The output user interface 1140 may be adapted to provide a visual representation of the predetermined region and/or the recommended route. In particular, the guidance control system 1110 may communicate with the output user interface (e.g., embodiable as a screen or display) to provide such a visual representation.

The system 1100 may further comprise a memory 1160 configured to store one or more instances of boundary information. The guidance control system may be configured to obtain one of the one or more instances of boundary information from the memory 1160. More particularly, the memory or database may store a plurality of instances of boundary information for different predetermined regions. In this approach, the boundary information corresponding to the predetermined region is selected from the database, i.e., by selecting the boundary information corresponding to the relevant predetermined region.

There is also provided an agricultural vehicle comprising any herein disclosed guidance control system 1110 and (where appropriate) the position monitoring system.

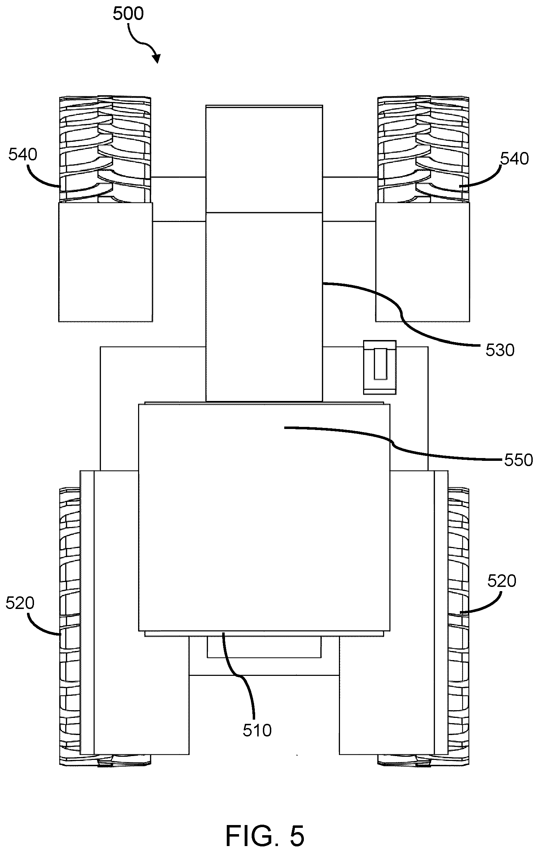

FIG. 5 illustrates an agricultural vehicle 500 comprising a guidance control system 550 as herein proposed.

For example, the agricultural vehicle 500 comprises a cabin 510; rear wheels 520; a hood 530; and front wheels 540. In this example, the guidance control system 550 (not shown) is situated in the cabin 510, but in other embodiments, the guidance control system 550 can be situated in any suitable place within the agricultural vehicle. In some embodiments, where appropriate, the agricultural vehicle 500 may further comprise a position monitoring system (as described above). For example, the position monitoring system may also be situated in the cabin 510.

The guidance control system 550 may comprise at least one processor (not shown); and at least one non-transitory computer-readable storage medium (not shown) storing instructions thereon that, when executed by the at least one processor, cause the guidance control system 550 to perform any herein-disclosed method.

In particular examples, the guidance control system 550 may perform the acts of: obtaining, by a guidance control system, boundary information defining the predetermined region; obtaining, by the guidance control system, windrow information defining the locations of a plurality of windrows within the predetermined region; generating, by the guidance control system, a plurality of waylines based on the windrow information; generating, by the guidance control system, a plurality of connecting segments for connecting the generated plurality of waylines together; generating, by the guidance control system, a recommended route for movement of the agricultural vehicle within the predetermined region by processing at least the boundary information, the plurality of waylines, and the plurality of connecting segments; and during a subsequent performance of the agricultural process by the agricultural vehicle within the region: monitoring, using a position monitoring device, the position of the agricultural vehicle with respect to the recommended route; and responsive to a deviation of the monitored position of the agricultural vehicle from the recommended route, updating, by the guidance control system, the recommended route.

In some examples, the guidance control system 550 may perform acts of: obtaining, by a guidance control system, boundary information defining the predetermined region; obtaining, by the guidance control system, windrow information defining the locations of a plurality of windrows within the predetermined region; generating, by the guidance control system, a plurality of waylines based on the windrow information; generating, by the guidance control system, a plurality of connecting segments for connecting the generated plurality of waylines together; generating, by the guidance control system, a recommended route for movement of the agricultural vehicle within the predetermined region by processing at least the boundary information, the plurality of waylines, and the plurality of connecting segments; and during a subsequent performance of the agricultural process by the agricultural vehicle within the region, controlling the travel direction of the agricultural vehicle to follow the recommended route for the agricultural vehicle.

It will be understood that disclosed methods are preferably computer-implemented methods. As such, there is also proposed the concept of a computer program comprising code means for implementing any described method when said program is run on a guidance control system, such as a computer. Thus, different portions, lines or blocks of code of a computer program according to an embodiment may be executed by a guidance control system or computer to perform any herein described method.

A computer program may be stored on a computer-readable medium, itself an embodiment of the disclosure. A "computer-readable medium" is any suitable mechanism or format that can store a program for later processing by a guidance control system. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing embodiments of the disclosure, from a study of the drawings, the disclosure and the appended claims. In the claims, the word "comprising" does not exclude other elements or acts, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

1. A computer-implemented method for generating a recommended route for an agricultural vehicle to perform an agricultural process within a predetermined region bound by a boundary, the computer-implemented method comprising:
obtaining, by a guidance control system, boundary information defining the predetermined region;
obtaining, by the guidance control system, windrow information defining the locations of a plurality of windrows within the predetermined region;
generating, by the guidance control system, a plurality of waylines based on the windrow information;
generating, by the guidance control system, a plurality of connecting segments for connecting the generated plurality of waylines together;
generating, by the guidance control system, a recommended route for movement of the agricultural vehicle within the predetermined region by processing at least the boundary information, the plurality of waylines, and the plurality of connecting segments; and
during a subsequent performance of the agricultural process by the agricultural vehicle within the region:
monitoring, using a position monitoring device, the position of the agricultural vehicle with respect to the recommended route; and
responsive to a deviation of the monitored position of the agricultural vehicle from the recommended route, updating, by the guidance control system, the recommended route.

2. The computer-implemented method of claim 1, wherein generating the plurality of waylines comprises offsetting each of the plurality of windrows to opposing sides by a predetermined length such that for each windrow, a corresponding pair of way lines is generated.

3. The computer-implemented method of claim 1 or 2, wherein generating the plurality of waylines is further based on a spout length of a second agricultural vehicle to be used in the agricultural process.

4. The computer-implemented method of claim 3, wherein generating the plurality of waylines comprises offsetting each of the plurality of windrows to opposing sides by the spout length of the second agricultural vehicle, such that for each windrow, a corresponding pair of waylines is generated.

5. The computer-implemented method of any of claims 1 to 4, further comprising:
obtaining, by the guidance control system, road information defining at least one road connected to the predetermined region; and
wherein generating the plurality of connecting segments further comprises generating at least one connecting segment for connecting the at least one road connected to the predetermined region to at least one of the generated plurality of waylines.

6. The computer-implementation method of any of claims 1 to 5, wherein each of the plurality of connecting segments comprise a smooth curved segment.

7. The computer-implemented method of any of claims 1 to 6, wherein obtaining the windrow information comprises generating the windrow information, by the guidance control system, based on georeferenced data defining a route taken by a past agricultural vehicle.

8. The computer-implemented method of claim 7, wherein the route taken by the past agricultural vehicle is a route of the past agricultural vehicle which resulted in the formation of the plurality of windrows.

9. The computer-implemented method of any of claims 1 to 8, wherein generating the recommended route comprises:
generating a directed weighted multigraph comprising a plurality of vertices and a plurality of arcs by processing at least the boundary information, the plurality of waylines, and the plurality of connecting segments; and
generating the recommended route based on the generated directed weighted multigraph.

10. The computer-implemented method of any of claims 1 to 9, wherein the agricultural vehicle comprises a transport unit and the agricultural process comprises offloading the plurality of windrows from a second agricultural vehicle during harvesting.

11. The computer-implemented method of any one of claims 1 to 10, further comprising controlling an output user interface to provide a visual representation of the recommended route.

12. The computer-implemented method of claim 11, wherein controlling the output user interface comprises:
providing a visual representation of the predetermined region; and
overlaying a visual representation of the recommended route, over the visual representation of the predetermined region, in the form of one or more lines representing the recommended route.

13. The computer-implemented method of any one of claims 1 to 12, wherein:
the position monitoring device is configured to define a position of the agricultural vehicle within a predefined co-ordinate system; and
the recommended route defines a recommended path for the agricultural vehicle within the predefined co-ordinate system.

14. The computer-implemented method of claim 13, wherein the recommended route comprises one or more location markers each identifying a point of the recommended route with respect to the predetermined co-ordinate system.

15. An agricultural vehicle, comprising:
a guidance control system configured to control one or more operations of the agricultural vehicle and comprising:
at least one processor; and
at least one non-transitory computer-readable storage medium storing instructions thereon that, when executed by the at least one processor, cause the guidance control system to:
obtain boundary information defining the predetermined region;
obtain windrow information defining the locations of a plurality of windrows within the predetermined region;
generate a plurality of waylines based on the windrow information;
generate a plurality of connecting segments for connecting the generated plurality of waylines together;
generate a recommended route for movement of the agricultural vehicle within the predetermined region by processing at least the boundary information, the plurality of waylines, and the plurality of connecting segments; and
during a subsequent performance of the agricultural process by the agricultural vehicle within the region:
monitor, using a position monitoring device, the position of the agricultural vehicle with respect to the recommended route; and
responsive to a deviation of the monitored position of the agricultural vehicle from the recommended route, update, by the guidance control system, the recommended route.
